(19) Europäisches Patentamt
European Patent Office
Office européen des brevets

(11) **EP 4 246 108 A1**

(12) **EUROPEAN PATENT APPLICATION**
published in accordance with Art. 153(4) EPC

(43) Date of publication:
**20.09.2023  Bulletin 2023/38**

(21) Application number: **21891930.6**

(22) Date of filing: **11.11.2021**

(51) International Patent Classification (IPC):
**G01J 3/45** (2006.01)        **G01N 21/27** (2006.01)

(52) Cooperative Patent Classification (CPC):
**G01J 3/45; G01N 21/27**

(86) International application number:
**PCT/JP2021/041441**

(87) International publication number:
**WO 2022/102685 (19.05.2022 Gazette 2022/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **11.11.2020   JP 2020188215**

(71) Applicants:
• **MORESCO Corporation
Kobe-shi, Hyogo 650-0047 (JP)**

• **National University Corporation
Hokkaido University
Sapporo-shi, Hokkaido 060-0808 (JP)**

(72) Inventors:
• **SHIMADA, Toshihiro
Sapporo-shi, Hokkaido 060-0808 (JP)**
• **NAKACHO, Yoshifumi
Kobe-shi, Hyogo 650-0047 (JP)**

(74) Representative: **Bittner, Thomas L.
Boehmert & Boehmert
Anwaltspartnerschaft mbB
Pettenkoferstrasse 22
80336 München (DE)**

(54) **SPECTROSCOPIC ANALYSIS SYSTEM, CALCULATING DEVICE, AND CALCULATING PROGRAM**

(57)     To achieve both reduction in size of a device and expansion of a measurable wavelength range, a spectroscopic analysis system (100) includes: a spectroscopic analysis device (1) including a light source (11), an interferometer (12), and a detector (14); and a calculation device (2) configured to calculate a plurality of parameters that minimize a difference between (a) each of detection values that are obtained by analysis of one sample under a plurality of different analysis conditions and (b) a theoretical value that is calculated by using a function which represents an absorption spectrum of the sample with the parameters. (Fig. 1)

FIG. 1

**Description**

The present invention relates to a spectroscopic analysis system and the like which include a spectroscopic analysis device that is provided with a light source, an interferometer, and a detector.

Background

Spectroscopic analysis systems each measure, as an absorption spectrum, an interaction of a substance with electromagnetic waves at various wavelengths of, for example, ultraviolet and visible light, near-infrared light, and middle to far-infrared light, and use the absorption spectrum for identification and quantitative determination of the substance. Such a spectroscopic analysis system is widely used in the fields of, for example, chemistry, materials, and medical care.

Among known conventional spectroscopic analysis systems, there is a system in which an interferogram of a sample is created with use of a Michelson interferometer and subjected to Fourier transform, so that an absorption spectrum of the sample is obtained. Further, as another known conventional spectroscopic analysis system, there is a system that employs a Fabry-Perot interferometer.

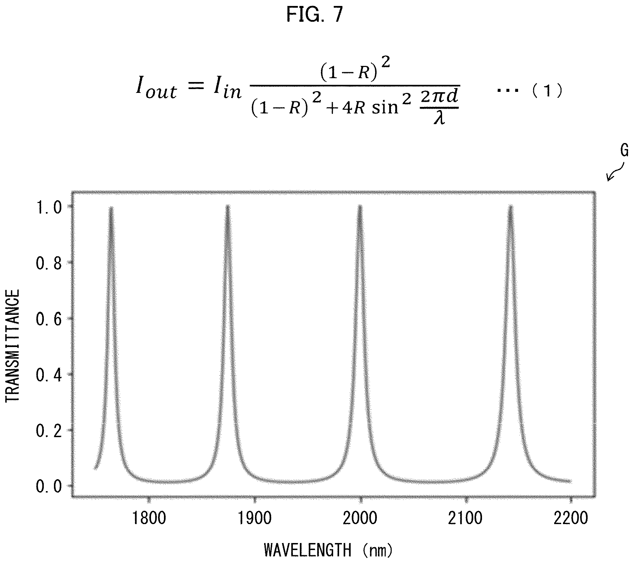

Here, the Michelson interferometer has a problem in that size reduction is difficult. On the other hand, the Fabry-Perot interferometer has a problem in that a measurable frequency band is narrow. The following will discuss, with Fig. 7, a reason why the measurable frequency band is narrow in a case where a Fabry-Perot interferometer is used. Fig. 7 is a diagram showing a relationship between transmittance and wavelength of the Fabry-Perot interferometer.

As shown in graph G of Fig. 7, in the Fabry-Perot interferometer, a wavelength at which the transmittance is high appears periodically. In addition, a relationship between incident light $I_{in}$ to the Fabry-Perot interferometer and outgoing light $I_{out}$ from the Fabry-Perot interferometer is expressed by Mathematical Expression (1) shown in Fig. 7. Note that in Mathematical Expression (1), d represents a mirror-to-mirror distance, $\lambda$ represents a wavelength, and R represents a reflectance. It is clear also from Mathematical Expression (1) that the transmittance, that is, the value of $I_{out}/I_{in}$, varies periodically as the wavelength and wave number change.

From such a characteristic, in a case where the Fabry-Perot interferometer was used, it was necessary to narrow a range of the wavelength (reciprocal of wave number) so that only one peak of transmittance appears. For example, in an example shown in Fig. 7, it is possible to have only one peak of transmittance in a case where only light in a range of $\lambda$ = 1850 nm to 1950 nm is arranged to enter the Fabry-Perot interferometer. Then, it is possible to measure a spectrum in this range by slightly changing d in a manner such that the wavelength at which the transmittance is high is shifted.

Widening the measurable frequency band of a Fabry-Perot interferometer has been tried conventionally. For example, JP 6-34439 below discloses a spectroscopic device that uses a Fabry-Perot interferometer and a Fourier spectrometer together so as to make it possible to widen a measurable frequency band while taking advantage of high resolution of the Fabry-Perot interferometer.

Summary

Technical Problem

However, since the Fourier spectrometer is used together in the above-described conventional technique, there is a problem in that size reduction is limited. An aspect of the present invention is to provide a spectroscopic analysis system and the like capable of achieving both reduction in size of a device and expansion of a measurable wavelength range.

Solution to Problem

To solve the problem, a spectroscopic analysis system in an aspect of the present invention includes: a spectroscopic analysis device including a light source, an interferometer, and a detector; and a calculation device configured to calculate a plurality of parameters that minimize a difference between (a) each of detection values that are obtained by the detector when one sample is analyzed by the spectroscopic analysis device under a plurality of different analysis conditions and (b) a corresponding one of theoretical values that are calculated detection values of the detector under each of the analysis conditions, the theoretical values being calculated by using a function which represents an absorption spectrum of the sample with the parameters.

Further, to solve the problem, a calculation device in an aspect of the present invention includes: a measurement result obtaining section configured to obtain detection values of a detector, the detection values being obtained by analyzing one sample under a plurality of different analysis conditions with use of a spectroscopic analysis device which includes a light source, an interferometer, and the detector; and a spectrum calculating section configured to calculate a plurality of parameters that minimize a difference between (a) each of the detection values that are obtained by the measurement result obtaining section and (b) a corresponding one of theoretical values that are calculated detection values of the detector under each of the analysis conditions, the theoretical values being calculated by using a function which represents an absorption spectrum of the sample with the parameters.

Advantageous Effects of Invention

One aspect of the present invention makes it possible to achieve both reduction in size of a device and expansion of a measurable wavelength range.

Brief Description of Drawings

Fig. 1    is a block diagram illustrating a configuration example of a spectroscopic analysis system in Embodiment 1 of the present invention.

Fig. 2    is a flowchart showing one example process in a case where an absorption spectrum of a sample is calculated by the spectroscopic analysis system.

Fig. 3    is a block diagram illustrating a configuration example of a spectroscopic analysis system in Embodiment 2 of the present invention.

Fig. 4    is a diagram illustrating analysis results obtained by the spectroscopic analysis device.

Fig. 5    is a diagram showing an absorption spectrum that is calculated by a calculation device and an absorption spectrum that is derived by Fourier transform.

Fig. 6    is a diagram showing an absorption spectrum that is obtained by Fourier transforminfrared spectroscopy (FT-IR) of cutting oil for use in cutting metal.

Fig. 7    is a diagram showing a relationship between transmittance and wavelength of a Fabry-Perot interferometer.

Description of Embodiments

Embodiment 1

(System configuration)

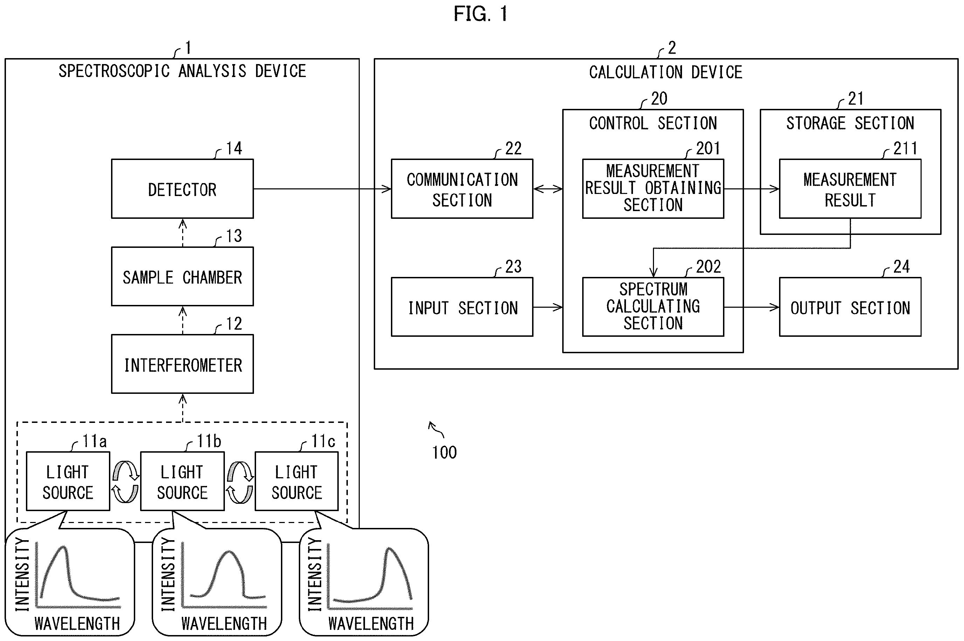

The following will discuss a configuration of a spectroscopic analysis system 100 in an embodiment of the present invention, with Fig. 1. Fig. 1 is a block diagram illustrating a configuration example of the spectroscopic analysis system 100. As shown in Fig. 1, the spectroscopic analysis system 100 includes a spectroscopic analysis device 1 and a calculation device 2. Note that the spectroscopic analysis device 1 and the calculation device 2 can be configured as one device.

The spectroscopic analysis system 100 calculates an absorption spectrum of a sample by spectroscopic analysis, and is suitable for analysis of a liquid sample. For example, the presence or absence of degradation or a degree of degradation of oil can be determined by analyzing the oil as a sample in the spectroscopic analysis system 100. Certainly, the sample to be analyzed by the spectroscopic analysis system 100 is not limited to oil. The spectroscopic analysis system 100 can be used for analysis of any sample whose absorption spectrum is measurable. In addition, the spectroscopic analysis system 100 can perform spectroscopic analysis with any electromagnetic wave such as ultraviolet and visible light, in addition to an electromagnetic wave in the infrared region.

The spectroscopic analysis device 1 is a device for analyzing a spectrum of a sample by a spectroscopic method. The spectroscopic analysis device 1 includes light sources 11a to 11c, an interferometer 12, a sample chamber 13, and a detector 14. Note that in a case where it is not necessary to distinguish the light sources 11a to 11c from each other, these light sources 11a to 11c are simply referred to as "light source 11".

The light source 11 emits light that is used for spectroscopic analysis. Outgoing light which the light source 11 emits enters the interferometer 12. The spectrum of the outgoing light which the light source 11 emits is calculated in advance. Then, a function ($g_i(k)$ described later) which represents the spectrum is stored in the calculation device 2. In Fig. 1, attached are graphs which show respective relationships between intensity and wavelength of outgoing light beams that are emitted by the light sources 11a to 11c, that is, spectra of the outgoing light beams. As shown in these graphs, the spectra of the outgoing light beams emitted by the light sources 11a to 11c are different from each other. In other words, the spectroscopic analysis device 1 includes a plurality of light sources which have respectively different spectra of outgoing light beams. In other words, the spectroscopic analysis device 1 includes a plurality of light sources which have respectively different intensity characteristics with respect to wavelength. For analysis, any one of the light sources 11a to 11c is used. That is, the spectroscopic analysis device 1 has a configuration in which analysis conditions are switched from one to another by switching the light source 11 for use in analysis.

The interferometer 12 causes interference of the outgoing light that the light source 11 emits. The interferometer 12 includes two mirrors. One of the two mirrors is configured to be movable so that a mirror-to-mirror distance can be varied. The interferometer 12 may be, for example, a Michelson interferometer or a Fabry-Perot interferometer. In a case where the size of the spectroscopic analysis device 1 is to be reduced, a Fabry-Perot interferometer composed of a micro electro mechanical system (MEMS) is desirably used as the interferometer 12. It is also possible to apply various interferometers which operate on the same or similar principles as the Michelson interferometer or the Fabry-Perot interferometer.

The sample chamber 13 accommodates a sample that is to be subjected to spectrum measurement. More precisely, the sample chamber 13 is a space that accommodates a sample container, which is called an optical cell or cuvette. Interference light that is emitted from the interferometer 12 is transmitted through the sample container in the sample chamber 13 and enters the detector 14. The sample chamber 13 and the sample container each desirably have a shape and a material having less influence on calculation of the absorption spectrum of the sample.

Note that the spectroscopic analysis device 1 may be configured to detect, by the detector 14, reflected light from reflection on the sample. Alternatively, the spectroscopic analysis device 1 may be configured to: cause the outgoing light, which the light source 11 emits, to enter the sample; cause, by the interferometer 12, interference of reflected light from reflection of the outgoing light on the sample or transmitted light from transmission of the outgoing light through the sample; and detect a resultant light by the detector 14.

The detector 14 detects the interference light that is emitted from the interferometer 12, and outputs a detection value that indicates an intensity of the interference light thus detected. The detector 14 should be a detector that is appropriate to the light source 11, the interferometer 12, the sample, etc. For example, in a case where an infrared absorption spectrum of the sample is to be obtained, a light source 11 that emits infrared light should be used and then, an infrared detector should be used as the detector 14.

The calculation device 2 calculates the absorption spectrum of the sample. The calculation device 2 includes a control section 20 that carries out overall control of each section of the calculation device 2, and a storage section 21 in which various data to be used by the calculation device 2 is stored. The control section 20 includes a measurement result obtaining section 201 and a spectrum calculating section 202. In the storage section 21, a measurement result 211 is also stored.

The calculation device 2 further includes a communication section 22 for allowing the calculation device 2 to communicate with another device, an input section 23 that receives an input operation to the calculation device 2, and an output section 24 for allowing the calculation device 2 to output information. Note that the above-described component elements excluding the control section 20 may be each realized by an external device of the calculation device 2 which is externally connected to the calculation device 2.

The measurement result obtaining section 201 obtains a measurement result of the spectroscopic analysis device 1. More specifically, the measurement result obtaining section 201 obtains detection values of the detector 14 when one sample is analyzed by the spectroscopic analysis device 1 under a plurality of different conditions. Note that, in such analysis, since an optical path difference of light to interfere is varied by varying the mirror-to-mirror distance of the interferometer 12, the measurement result obtaining section 201 obtains, in addition to the detection values of the detector 14, data that indicates the optical path difference or the mirror-to-mirror distance at the time when each of the detection values is obtained. The measurement result obtaining section 201 then associates, with an analysis condition (for example, spectrum data of the light source 11 used), each piece of the data thus obtained, and stores, as the measurement result 211 in the storage section 21, the data associated with the analysis condition.

The spectrum calculating section 202 calculates a plurality of parameters that minimize a difference between (a) each of the detection values that are obtained by the measurement result obtaining section 201 and (b) a corresponding one of theoretical values that are calculated detection values of the detector 14 under each of the analysis conditions, the theoretical values being calculated by using a function which represents the absorption spectrum of the sample with the parameters. In other words, the spectrum calculating section 202 determines the function that represents the absorption spectrum of the sample such that the function is best fitted to the data (detection values) which have been experimentally obtained by the spectroscopic analysis device 1. Such a technique is called curve fitting.

As described above, the spectroscopic analysis system 100 includes: the spectroscopic analysis device 1 including the light source 11, the interferometer 12, and the detector 14; and the calculation device 2 configured to calculate a plurality of parameters that minimize a difference between (a) each of detection values that are obtained by the detector 14 when one sample is analyzed by the spectroscopic analysis device 1 under a plurality of different analysis conditions and (b) a corresponding one of theoretical values that are calculated detection values of the detector 14 under each of the analysis conditions, the theoretical values being calculated by using a function which represents the absorption spectrum of the sample with the parameters. The calculation device 2 further includes, in order to perform each processing described above, the measurement result obtaining section 201 that obtains the detection values of the detector 14, and the spectrum calculating section 202 that calculates the parameters with use of the detection values that are obtained by the measurement result obtaining section 201.

According to the above-described configuration, the parameters of the function which represents the absorption spectrum of the sample are calculated without performing an operation of Fourier transform. Therefore, it is not necessary to determine a position at which the optical path difference is zero though determination of such a position is necessary for the operation of the Fourier transform. Thus, it is possible to employ a compact interferometer 12 such as, for example, a Fabry-Perot interferometer that is composed of an MEMS. This makes it easy to carry the spectroscopic analysis device 1 and makes it possible to perform analysis in various fields.

Here, in the Fabry-Perot interferometer that is composed of an MEMS, there are a plurality of wavelengths at which, because light is mutually intensified by interference, the transmittance is high. For this reason, it has been conventionally necessary to narrow a wavelength range to be measured. However, according to the above-described configuration, it is possible to calculate, by computation, the parameters of the function that represents the absorption spectrum without narrowing the wavelength range to be measured. Therefore, the spectroscopic analysis system 100 makes it possible to achieve both reduction in size of a device and expansion of a measurable wavelength range.

(Details of calculation)

Assume that the detection value of the detector 14 at the mirror-to-mirror distance (x) is defined as $f_1(x)$, the transmittance of the interferometer 12 is defined as $h(x, k)$, and the absorption spectrum of the sample is defined as $s(k)$, when the spectrum of the outgoing light beam from the light source 11a is defined as $g_1(k)$. On such an assumption, theoretically, Mathematical Expression (2) below is obtained. The left side of Mathematical Expression (2) below is a function indicating a measured value that is obtained by the detector 14, and the right side is a function indicating a theoretical value. Also, for spectra $g_2(k)$ and $g_3(k)$ of the outgoing light beams from the light sources 11b and 11c, respectively, the same mathematical expression as described above is theoretically obtained for detection values $f_2(x)$ and $f_3(x)$ in analysis using those light sources. Note that k represents the wave number, and k = 1 / λ.

$$f_1(x) = \sum_k s(k)h(x,k)g_1(k) \quad \cdots \ (2)$$

As described above, the spectrum calculating section 202 can calculate the theoretical values by (i) multiplying the function $g_i(k)$ which represents the spectrum of the outgoing light from the light source 11, the function $h(x, k)$ which represents the transmittance of the interferometer 12, and a function $s(k)$ which represents the absorption spectrum of the sample and (ii) taking the sum of resultant products of such multiplications. Thus, it is possible to calculate a theoretical value of a value to be detected at the detector 14, of light which is emitted from the light source 11, transmitted through the interferometer 12, and partially absorbed by the sample.

The spectrum calculating section 202 should determine the parameters of the absorption spectrum $s(k)$ so that the Mathematical Expression (2) can be obtained for $f_1(x)$ to $f_3(x)$. However, it is generally difficult to make each of measured values and a corresponding one of theoretical values agree with each other without exception. Therefore, the spectrum calculating section 202 determines, as described below, the parameters of the absorption spectrum $s(k)$ by an approximate calculation method.

Specifically, the spectrum calculating section 202 should calculate the parameters that minimize a difference between a value of the function which represents the theoretical values and a value of the function $f_i(x)$ which represents the detection values obtained by actual measurement by the detector 14. Various approximate calculation methods can be applied as a calculation method for this purpose. For example, the difference between each of the detection values and a corresponding one of the theoretical values may be expressed by Mathematical Expression (3) below. Note that m in the following Mathematical Expression (3) represents any natural number, and the calculation method in the case of m = 2 is a least squares method.

$$\sum_i \left| f_i(x) - \sum_k s(k)h(x,k)g_i(k) \right|^m \quad \cdots \ (3)$$

In Mathematical Expression (3) above, $f_i(x)$ is a function which represents a detection value(s) in a case where analysis is performed under the i-th (i is a natural number) analysis condition. This function indicates a relationship between the optical path difference and the signal intensity, and can be generated by using the measurement result 211 that is stored in the storage section 21.

In addition, as described above, s(k) is a function which represents the absorption spectrum of the sample (a function which represents the relationship between the wavelength or wave number and the intensity). This function contains a plurality of parameters. When the values of these parameters are determined, the function s(k), i.e., the absorption spectrum of the sample is determined.

For example, s(k) may be expressed by Mathematical Expression (4) below, if it can be inferred that: the number of peaks (absorption peaks) which appear in the absorption spectrum of the sample is finite; and a characteristic peak of a substance constituting the sample appears.

$$s(k) = \Sigma_i A_j \cdot \exp(-(k - k_j)^2/B_j^2) \ \dots \ (4)$$

Note that in the above Mathematical Expression (4), j represents an absorption peak number, $k_j$ represents a position of the absorption peak, $A_j$ represents a parameter proportional to a height of the absorption peak, and $B_j$ represents a parameter proportional to a width of the absorption peak. The function s(k) can be determined by obtaining these parameters ($A_j$, $B_j$).

In particular, in an absorption spectrum obtained by infrared spectroscopic analysis, characteristic absorption peaks originating from molecular vibrations of substances that constitute the sample often appear, and a difference between samples often appears as a difference in ratio of the height and/or ratio of the width of the absorption peaks. Accordingly, the number of the absorption peaks is finite, and application of the above Mathematical Expression (4) is very effective.

In addition, as described above, h(x, k) is a function which represents the transmittance of the interferometer 12 (a function which represents the relationship between (i) the mirror-to-mirror distance and the wavelength and (ii) the intensity of transmitted light). Note that x represents the mirror-to-mirror distance in the interferometer 12. The function can be stored in advance in the calculation device 2. If the interferometer 12 is a Fabry-Perot interferometer, Mathematical Expression (1) shown in Fig. 7 should be used for h(x, k).

In addition, $g_i(k)$ is a function which represents the spectrum of the outgoing light from the light source 11, as described above. As described above, the function may be stored in advance in the calculation device 2. When three light sources, the light sources 11a to 11c, are used as the light source 11, the function $g_i(k)$ corresponding to each of the light sources 11a to 11c is used.

The spectrum calculating section 202 calculates the parameters of the function s(k) so as to minimize the difference indicated by the above-described Mathematical Expression (3). In this operation, the spectrum calculating section 202 first sets the parameters of the function s(k) to initial values, and then repeatedly performs an operation to update the parameters. As a result of such an operation, the function s(k) which represents the absorption spectrum of the sample is determined.

(Analysis conditions)

As described above, the calculation device 2 calculates the absorption spectrum of the sample by using each of the detection values of the detector 14 which are obtained at the time when the sample is analyzed by the spectroscopic analysis device 1 under a plurality of different conditions. Here, the spectroscopic analysis device 1 includes the plurality of light sources 11a to 11 c, the spectra of the outgoing light beams of which are different from each other, as described above.

Therefore, in the spectroscopic analysis device 1, it is possible to have different analysis conditions of the sample by switching the light source 11 for use in analysis. Accordingly, the measurement result obtaining section 201 should obtain each of the detection values of the detector 14 when the sample is analyzed with use of the outgoing light beams from the different light sources 11. Then, the spectrum calculating section 202 should calculate the parameters of the function so as to minimize the difference between (a) each of the detection values obtained and (b) a corresponding one of the theoretical values that are calculated detection values of the detector 14 when each of the light sources 11 are used, the theoretical values being calculated by using the function which represents the absorption spectrum of the sample.

This makes possible to obtain the detection values under the plurality of analysis conditions simply and quickly only by switching the light source 11, and to consequently calculate the absorption spectrum of the sample with use of the detection values.

For example, in a case where the light source 11 used includes three light sources in total that are the light sources 11a to 11c, i = 3 in the above Mathematical Expression (2). In this case, for example, the spectra of the light sources 11a to 11c can be defined as $g_1(x)$, $g_2(x)$, and gs(x), respectively, and $f_1(x)$, $f_2(x)$, and $f_3(x)$ each can be generated from detection values obtained in analysis in which a corresponding one of the light sources 11a to 11c is used. Thus, the absorption spectrum of the sample can be calculated by the Mathematical Expression (3).

Note that in the case of using the plurality of light sources 11, it is preferable to use the light sources 11 that have respectively different wavelength regions in each of which a peak of intensity appears. For example, in the example of Fig. 1, as illustrated in the graphs which are attached to the light sources 11a to 11c, the outgoing light beams of the light sources 11a to 11c have respectively different wavelength regions in each of which a peak of intensity appears. Accuracy of the absorption spectrum thus calculated can be increased by using such light sources 11a to 11c.

In addition, in a case where a Fabry-Perot interferometer is used as the interferometer 12, ideally, a plurality of light sources 11 should be used so that only one peak of transmittance of the Fabry-Perot interferometer appears for each light source 11. For example, when a Fabry-Perot interferometer having characteristics as shown in graph G in Fig. 7 is used, it is possible to use a light source 11a that emits light of $\lambda$ = 1850 nm to 1950 nm, a light source 11b that emits light of $\lambda$ = 1950 nm to 2050 nm, and a light source 11c that emits light of $\lambda$ = 2050 nm to 2200 nm. However, it is necessary to use a high-performance band-pass filter or the like in order to have a wavelength range limited to the above extent. The calculation device 2 makes it possible to calculate the absorption spectrum at accuracy sufficient for practical use without using such a band-pass filter or the like.

Further, the analysis conditions may be changed by using an optical member (e.g., a filter) that changes the spectrum of the outgoing light of the light source 11. In this case, use of two types of optical members having respectively different optical characteristics makes it possible to obtain three types in total of detection values that include detection values which result from measurement with use of each of the two types of the optical members and a detection value(s) which results from measurement with use of none of the optical members. Therefore, the absorption spectrum of the sample can be calculated as in the above-described example. Further, for example, in the case of using a light source 11, like an infrared light source, whose spectrum of outgoing light is changed in a heating temperature, it is also possible to change the spectrum of the outgoing light of the light source 11 by changing power supplied to the light source 11.

(Process flow)

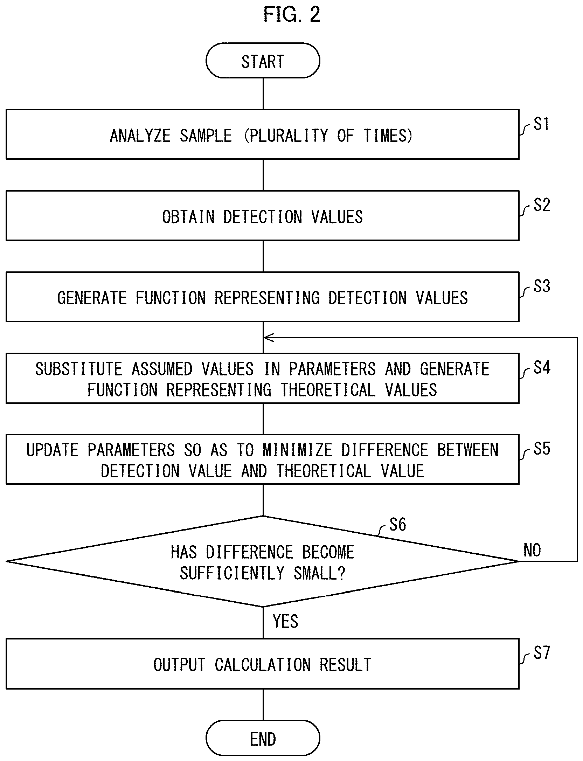

The following will discuss, with Fig. 2, a process flow in a case where an absorption spectrum of a sample is calculated by the spectroscopic analysis system 100. Fig. 2 is a flowchart showing one example process in a case where an absorption spectrum of a sample is calculated by the spectroscopic analysis system 100.

When an absorption spectrum of a sample is calculated by the spectroscopic analysis system 100, first, the spectroscopic analysis device 1 performs analysis of the sample a plurality of times while the analysis conditions are changed from one to another (S1). As described above, the spectrum of the light (the relationship between the wavelength and the intensity) used in each analysis of the plurality of times is changed, for example, by switching the light source 11.

Then, the measurement result obtaining section 201 of the calculation device 2 obtains, from the spectroscopic analysis device 1 through the communication section 22, detection values that have been obtained through the above-described analysis (S2). The measurement result obtaining section 201 stores, as the measurement result 211 in the storage section 21, the detection values thus obtained. Note that the detection values obtained by the analysis may be inputted to the calculation device 2 by a user through the input section 23.

Next, the spectrum calculating section 202 of the calculation device 2 reads the measurement result 211, and generates a function which represents the detection values, that is, the function $f_i(x)$ in the Mathematical Expression (3) (S3). The spectrum calculating section 202 also generates a function that represents theoretical values (a function that is obtained by changing "1" on the right side of the Mathematical Expression (2) to "i") (S4). At this time, the spectrum calculating section 202 substitutes assumed values (initial values) for the parameters that are included in the function which represents the theoretical values.

Then, the spectrum calculating section 202 updates the values of the parameters so as to minimize the difference between each of the detection values and a corresponding one of the theoretical values. Specifically, the spectrum calculating section 202 determines whether or not the difference represented by the Mathematical Expression (3) has become sufficiently small as a result of updating in S5 (S6). A criterion for this determination may be specified in advance. In a case where a result of determination is YES in S6, the process proceeds to S7. On the other hand, in a case where the result of determination is NO in S6, the process returns to S4. In this case, the spectrum calculating section 202 substitutes the values that are updated in S5, for the parameters that are included in the function which represents the theoretical values in S4. Then, the process proceeds to S4 and S5.

In S7, the spectrum calculating section 202 outputs a calculation result of the spectrum. For example, the spectrum calculating section 202 may output calculated parameters, may output a function that is determined by the calculated parameters, or may output a graph of the function. This allows a user of the spectroscopic analysis system 100 to recognize the absorption spectrum of the sample. Upon completion of S7, the process in the spectroscopic analysis system 100 is completed.

Note that in a case where repeated calculations of S4 to S6 described above are not necessary, the spectrum calculating section 202 should calculate, at the time when the function which represents the theoretical values is generated in S4, parameters that minimize the difference between each of the detection values and a corresponding one of the theoretical values. In this case, processing in S5 and S6 are omitted, and the parameters calculated in S4 are outputted in S7.

Embodiment 2

The following will discuss in detail another embodiment of the present invention. Note that for convenience of explanation, members having functions identical to those of the respective members described in Embodiment 1 are given respective identical reference numerals, and descriptions of those members will be omitted.

(System configuration)

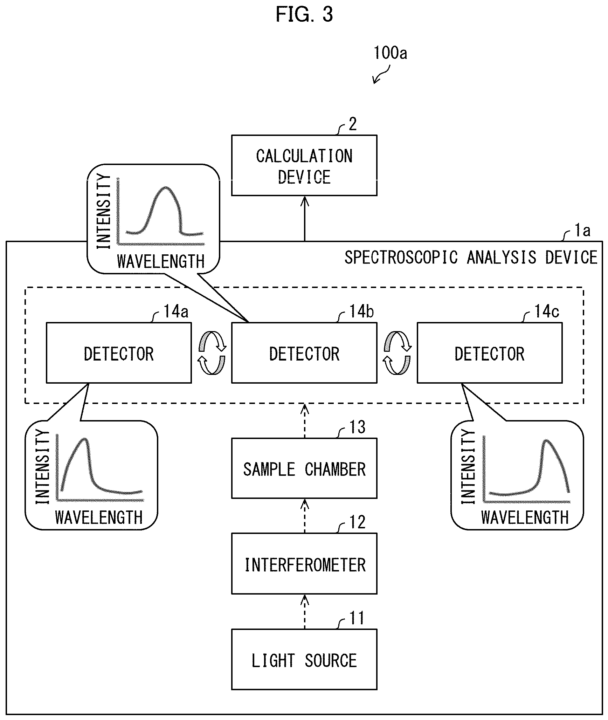

The following will discuss a configuration of a spectroscopic analysis system 100a in Embodiment 2, with Fig. 3. Fig. 3 is a block diagram illustrating a configuration example of the spectroscopic analysis system 100a. As illustrated in Fig. 3, the spectroscopic analysis system 100a includes a spectroscopic analysis device 1a and a calculation device 2. That is, the spectroscopic analysis system 100a is different from the spectroscopic analysis system 100 of Embodiment 1 in that the spectroscopic analysis system 100a includes the spectroscopic analysis device 1a instead of the spectroscopic analysis device 1.

The spectroscopic analysis device 1a includes, as illustrated in Fig. 3, a light source 11, an interferometer 12, a sample chamber 13, and detectors 14a to 14c. Note that in a case where it is not necessary to distinguish the detectors from each other, these detectors 14a to 14c are simply referred to as "detector 14". In this way, the spectroscopic analysis device 1a is different from the spectroscopic analysis device 1 of Embodiment 1 in that the spectroscopic analysis device 1a includes one light source 11 and also a plurality of the detectors 14.

All of the detectors 14a to 14c are configured to detect interference light that is emitted from the interferometer 12. The detectors 14a to 14c have respectively different detection sensitivity characteristics at each wavelength (a relationship between wavelength and sensitivity). In Fig. 3, attached are respective graphs of the detection sensitivity characteristics at each wavelength of the detectors 14a to 14c. In this way, the spectroscopic analysis device 1a includes a plurality of detectors that have respectively different detection sensitivity characteristics at each wavelength. For analysis, any one of the detectors 14a to 14c is used. That is, the spectroscopic analysis device 1a has a configuration in which analysis conditions are switched from one to another by switching the detector 14 for use in analysis.

Further, a measurement result obtaining section 201 of the calculation device 2 according to Embodiment 2 obtains detection values that are obtained when a sample is analyzed by using each of the detectors 14a to 14c. Then, the spectrum calculating section 202 of the calculation device 2 of Embodiment 2 calculates parameters of a function $s(k)$ so as to minimize a difference between (a) each of the above-described detection values and (b) a corresponding one of respective theoretical values that are calculated detection values of the plurality of detectors 14a to 14c, the theoretical values being calculated by using the function $s(k)$ which represents the absorption spectrum of the sample.

This makes it possible to obtain the detection values under the plurality of analysis conditions simply and quickly only by switching the detector 14 for use in analysis, and to consequently calculate the absorption spectrum of the sample with use of the detection values.

For example, in a case where the detector 14 used includes three detectors in total that are the detectors 14a to 14c, $i = 3$ in the Mathematical Expression (3) described in Embodiment 1. In this case, for example, a spectrum of the light source 11 can be defined as $g_1(x)$. Then, analysis can be performed by using each of the detectors 14a to 14c, and further, each of $f_1(x)$, $f_2(x)$, and $f_3(x)$ may be generated from detection values that are obtained through the analysis. The absorption spectrum of the sample can be thus calculated by the Mathematical Expression (3).

Note that in the case of using the plurality of detectors 14, it is preferable to use the detectors 14 that have respectively different wavelength regions in each of which a peak of detection sensitivity appears. For example, in the example of Fig. 3, as illustrated in the graphs which are attached to the detectors 14a to 14c, the detectors 14a to 14c have respectively different wavelength regions in each of which a peak of detection sensitivity appears. Accuracy of the absorption spectrum thus calculated can be increased by using such detectors 14a to 14c.

(Example of calculation of absorption spectrum)

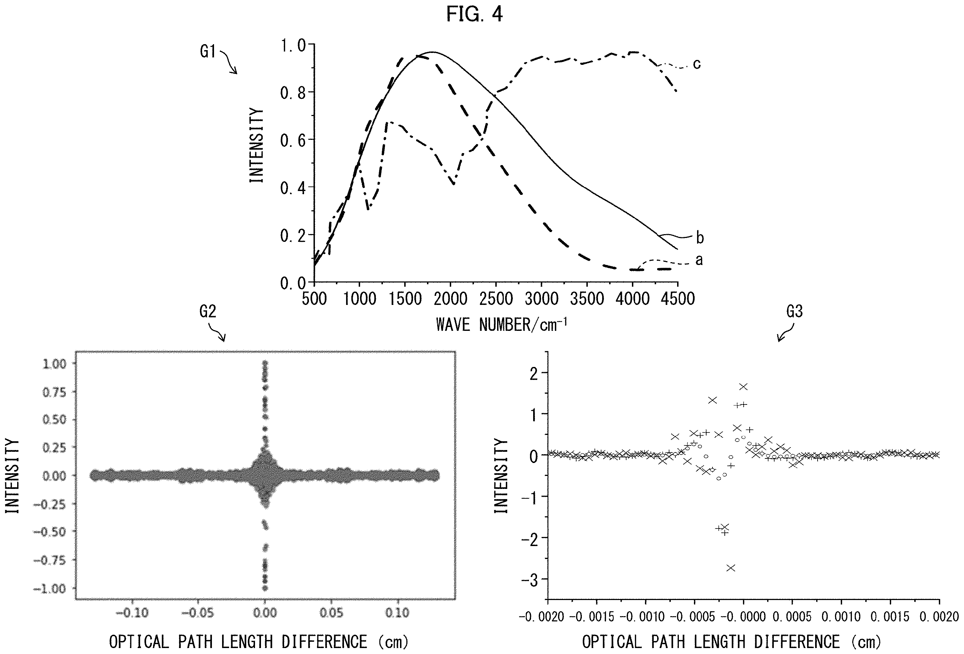

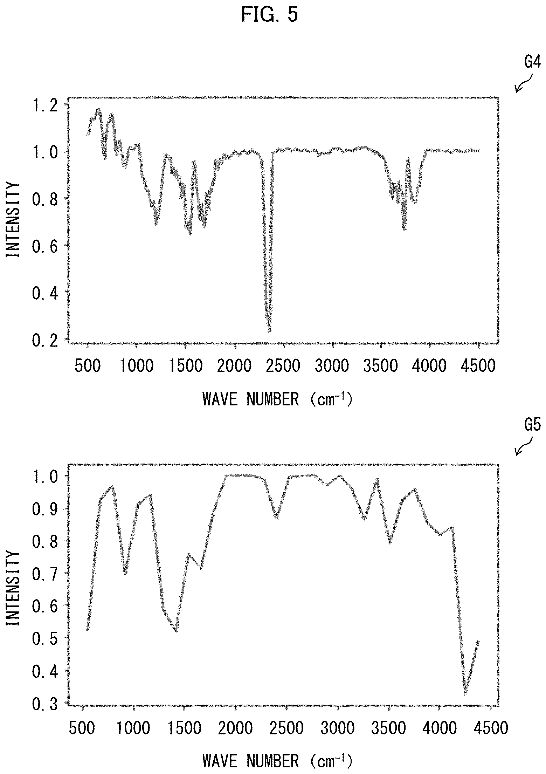

The following will discuss, with Figs. 4 and 5, an example in which an absorption spectrum is calculated by using the spectroscopic analysis system 100. Fig. 4 is a diagram illustrating analysis results that are obtained by the spectroscopic analysis device 1. Further, Fig 5 is a diagram showing an absorption spectrum that is calculated by the calculation device 2 and an absorption spectrum that is derived by Fourier transform.

Graph G1 in Fig. 4 shows spectra a to c of the outgoing light beams that the light sources 11a to 11c emit. In this example, the light source 11a is a cartridge heater, the light source 11b is a glow bar light source, and the light source 11c is a halogen lamp that is coated with silicon. This silicon is used to block light that is in the visible light region and that is emitted by the halogen lamp. As shown in graph G1, the spectra a to c of the outgoing light beams that the light sources 11a to 11c emit are different from each other. Note that the interferometer 12 used is a Michelson interferometer.

Further, graph G2 shows interferograms that are created by using the detection values which have been outputted by the detector 14 of the spectroscopic analysis device 1. Graph G2 superimposes respective interferograms corresponding to the light sources 11a to 11c. Respective shapes of the interferograms are generally similar to each other.

Note that a change in position of the movable mirror (optical path length) in this analysis is set to 5 mm ($\pm 0.25$ mm). In a case where the interferometer 12 is a Michelson interferometer, it is possible to obtain data that results from changing the mirror-to-mirror distance in such a relatively wide range. Therefore, the absorption spectrum of the sample can be derived by subjecting the data to Fourier transform. The absorption spectra obtained by Fourier transform of the data in graph G2 is shown as G4 in Fig. 5.

Further, graph G3 is obtained by cutting out a portion of graph G2. In graph G3, the interferograms respectively corresponding to the light sources 11a to 11c are indicated by series of "+", "x", and "o". Note that graph G3 has a horizontal axis (optical path length difference) whose range is arranged to substantially correspond to a change in mirror-to-mirror distance ($\pm 0.002$ cm = 40 $\mu$m) of a Fabry-Perot interferometer. Fig. 5 shows, in G5, an absorption spectrum that is calculated by inputting, to the calculation device 2, the data of graph G3 (data obtained through the analysis with use of each of the light sources 11a to 11c).

As shown in Fig. 5, in graph G5, peaks appear at positions corresponding to main peaks of graph G4. Accordingly, it is clear that the absorption spectrum calculated by the calculation device 2 is appropriate even when the spectrum is calculated from the data obtained by changing the mirror-to-mirror distance in a narrow range shown in graph G3. In this way, the calculation device 2 makes it possible to calculate the absorption spectrum of the sample from the data that has been obtained in the narrow range of the change in mirror-to-mirror distance. The narrow range is equivalent to a range of a change in mirror-to-mirror distance in the Fabry-Perot interferometer. Therefore, even in a case where the Fabry-Perot interferometer is used as the interferometer 12, the absorption spectrum of the sample can be calculated by the calculation device 2.

Note that it is possible to improve resolution by sharpening a characteristic of the light source 11 to be used, increasing the number of the light sources 11 to be used, and the like. Examples of a method of sharpening the characteristic of the light source 11 include using a light source 11 that has a spectrum whose peak width is narrower, using an optical member (a filter or the like) that narrows the peak width, or the like.

(Setting of initial values)

In calculating each of the parameters of the function s(k), calculation accuracy of the absorption spectrum of the sample can be increased by setting an appropriate initial value for each of the parameters. For example, if the absorption spectrum is known in a wavelength band, the absorption spectrum in another wavelength band can be calculated at higher accuracy by setting the initial values on the basis of information of the absorption spectrum.

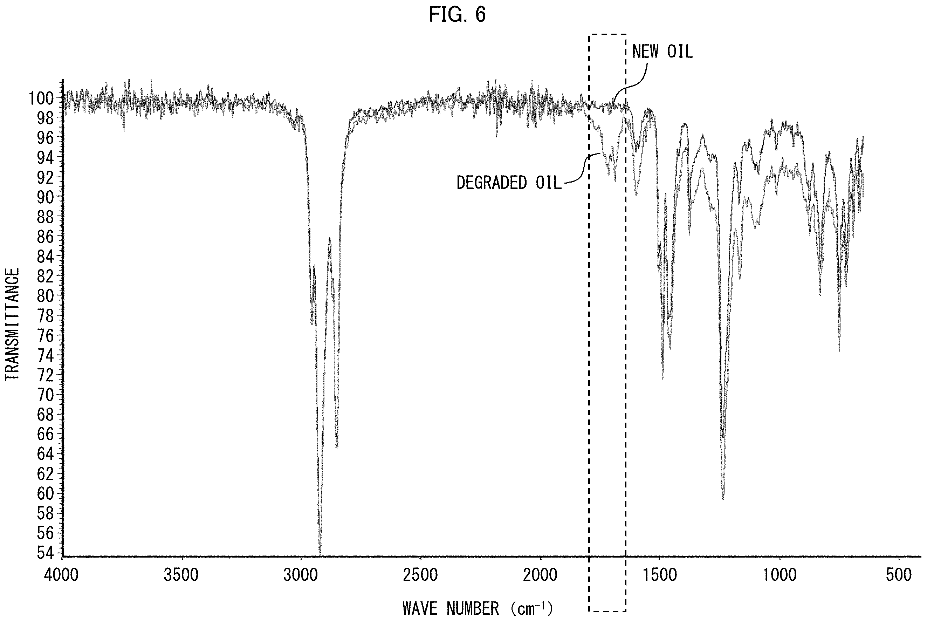

This is useful, for example, in determining the presence or absence of degradation of the sample. The following will discuss this with Fig. 6. Fig. 6 is a diagram showing an absorption spectrum that is obtained by Fourier transform-infrared spectroscopy (FT-IR) of cutting oil for use in cutting metal.

More specifically, Fig. 6 shows an absorption spectrum of unused cutting oil (new oil) on which an absorption spectrum of the cutting oil (degraded oil) after used and degraded is superimposed. Respective shapes of these absorption spectra are generally similar to each other, except that the former has no peak in the vicinity of 1700 (cm$^{-1}$), which is indicated by a dashed box in Fig. 6, whereas the latter has such a peak. This peak is caused by oxidation of an alkyl group of the cutting oil.

Therefore, whether or not the cutting oil is degraded can be determined by the presence or absence of the peak in the vicinity of 1700 (cm$^{-1}$). Further, since an area of the peak increases as such degradation progresses (the oxidation of the alkyl group proceeds), it is also possible to determine a degree of degradation on the basis of the area of the peak.

For this reason, in a case where the sample is used cutting oil and an analysis is performed for determining the presence or absence of degradation of the used cutting oil or the degree of degradation of the used cutting oil, the initial values should be set on the assumption that the absorption spectrum of wave number (wavelength) bands excluding the vicinity of 1700 (cm$^{-1}$) is the same as the absorption spectrum that is known as shown in Fig. 6. Certainly, application of such a method of setting the initial values is not limited to the case of cutting oil, but the method can be applied to any sample whose absorption spectrum is known in some wavelength (wave number) bands.

In this way, the spectrum calculating section 202 may calculate the parameters by using, as the initial values of the parameters of the function s(k), values which are determined on the basis of a known portion of the absorption spectrum of the sample. This makes it possible to increase the accuracy of the absorption spectrum thus calculated.

For example, when it is known that a new absorption peak occurs due to degradation of a sample or a portion of an absorption peak detected before degradation increases, it is possible to approximately express s(k) by the following Mathematical Expression (5).

$$s(k) = s_0(k) + A \cdot \exp(-(k - k_1)^2/B^2) \ldots (5)$$

In the Mathematical Expression (5), so(k) represents an absorption spectrum of the sample that has not degraded, and may be obtained, for example, on the basis of a measurement result that is obtained in advance by ordinary spectroscopic measurement. In other words, so(k) includes a known portion (parameters indicating a non-degraded sample absorption spectrum that does not change even after degradation) of the absorption spectrum s(k) of the sample.

Further, in Mathematical Expression (5), $k_1$ represents a position of an absorption peak of a substance that is generated by degradation, A represents a parameter proportional to a height of the absorption peak, and B represents a parameter proportional to a width of the absorption peak. The function s(k) can be determined by obtaining these parameters (A, B).

When the Mathematical Expression (5) is used, the parameters included in so(k) (parameters indicating a non-degraded sample absorption spectrum that does not change even after degradation) becomes the initial values of the parameters of s(k). This makes it possible to calculate, at high accuracy, the height and width of the absorption peak that has changed due to degradation of the sample. In addition, the above also makes it possible to quantitatively clarify the degree of degradation of the sample.

[Software Implementation Example]

Control blocks of the calculation device 2 (particularly, each section of the control section 20) can be realized by a logic circuit (hardware) provided in an integrated circuit (IC chip) or the like or can be alternatively realized by software.

In the latter case, the calculation device 2 includes a computer that executes instructions of a calculation program that is software realizing the foregoing functions. The computer, for example, includes at least one processor and at least one computer-readable storage medium storing the calculation program. An object of an aspect of the present invention can be achieved by the processor of the computer reading and executing the calculation program stored in the storage medium. Examples of the processor encompass a central processing unit (CPU). Examples of the storage medium encompass a "non-transitory tangible medium" such as a read only memory (ROM), a tape, a disk, a card, a semiconductor memory, and a programmable logic circuit. The computer may further include a random access memory (RAM) or the like in which the program is loaded. The program can be made available to the computer via any transmission medium (such as a communication network or a broadcast wave) which allows the program to be transmitted. Note that an aspect of the present invention can also be achieved in the form of a computer data signal in which the program is embodied via electronic transmission and which is embedded in a carrier wave.

The present invention is not limited to the embodiments, but can be altered by a skilled person in the art within the scope of the claims. The present invention also encompasses, in its technical scope, any embodiment derived by combining technical means disclosed in differing embodiments.

Reference Signs List

| 1, 1a | spectroscopic analysis device |
| 11a-11c | light source |
| 12 | interferometer |
| 14, 14a-14c | detector |
| 2 | calculation device |
| 201 | measurement result obtaining section |
| 202 | spectrum calculating section |
| 100, 100a | spectroscopic analysis system |

Claims

1.    A spectroscopic analysis system, comprising:

- a spectroscopic analysis device including a light source, an interferometer, and a detector; and
- a calculation device configured to calculate a plurality of parameters that minimize a difference between (a) each of detection values that are obtained by the detector when one sample is analyzed by the spectroscopic analysis device under a plurality of different analysis conditions and (b) a corresponding one of theoretical values that are calculated detection values of the detector under each of the analysis conditions, the theoretical values being calculated by using a function which represents an absorption spectrum of the sample with the parameters.

2. The spectroscopic analysis system according to claim 1, wherein the calculation device calculates the theoretical values by multiplying a function which represents a spectrum of outgoing light from the light source, a function which represents a transmittance of the interferometer, and the function which represents the absorption spectrum of the sample.

3. The spectroscopic analysis system according to claim 1 or 2, wherein:

   - the spectroscopic analysis device includes a plurality of the light sources, the light sources having respectively different spectra of outgoing light beams; and
   - the calculation device calculates the parameters that minimize a difference between (a) each of detection values that are obtained by the detector when the sample is analyzed with use of the outgoing light beams from the light sources which are different from each other and (b) a corresponding one of theoretical values that are calculated detection values of the detector when each of the light sources are used, the theoretical values being calculated by using the function which represents the absorption spectrum of the sample.

4. The spectroscopic analysis system according to claim 1 or 2, wherein:

   - the spectroscopic analysis device includes a plurality of the detectors, the detectors having respectively different detection sensitivity characteristics at each wavelength; and
   - the calculation device calculates the parameters that minimize a difference between (a) each of detection values that are obtained when the sample is analyzed by each of the plurality of detectors and (b) a corresponding one of theoretical values that are calculated detection values of the plurality of detectors by using the function which represents the absorption spectrum of the sample.

5. The spectroscopic analysis system according to any one of claims 1 to 4, wherein the calculation device calculates the parameters of the function that represents the absorption spectrum, by using, as respective initial values of the parameters, the initial values that are determined on the basis of a known portion of the absorption spectrum of the sample.

6. A calculation device comprising:

   - a measurement result obtaining section configured to obtain detection values of a detector, the detection values being obtained by analyzing one sample under a plurality of different analysis conditions with use of a spectroscopic analysis device which includes a light source, an interferometer, and the detector; and
   - a spectrum calculating section configured to calculate a plurality of parameters that minimize a difference between (a) each of the detection values that are obtained by the measurement result obtaining section and (b) a corresponding one of theoretical values that are calculated detection values of the detector under each of the analysis conditions, the theoretical values being calculated by using a function which represents an absorption spectrum of the sample with the parameters.

7. A calculation program for causing a computer to function as a calculation device recited in claim 6, the calculation program for causing the computer to function as the measurement result obtaining section and the spectrum calculating section.

FIG. 1

EP 4 246 108 A1

# FIG. 2

START

ANALYZE SAMPLE (PLURALITY OF TIMES) — S1

OBTAIN DETECTION VALUES — S2

GENERATE FUNCTION REPRESENTING DETECTION VALUES — S3

SUBSTITUTE ASSUMED VALUES IN PARAMETERS AND GENERATE FUNCTION REPRESENTING THEORETICAL VALUES — S4

UPDATE PARAMETERS SO AS TO MINIMIZE DIFFERENCE BETWEEN DETECTION VALUE AND THEORETICAL VALUE — S5

HAS DIFFERENCE BECOME SUFFICIENTLY SMALL? — S6

NO

YES

OUTPUT CALCULATION RESULT — S7

END

# FIG. 3

FIG. 4

EP 4 246 108 A1

## FIG. 5

G4

G5

FIG. 6

## FIG. 7

$$I_{out} = I_{in} \frac{(1-R)^2}{(1-R)^2 + 4R \sin^2 \frac{2\pi d}{\lambda}} \quad \cdots (1)$$

## INTERNATIONAL SEARCH REPORT

| International application No. |
| --- |
| **PCT/JP2021/041441** |

**A. CLASSIFICATION OF SUBJECT MATTER**

*G01J 3/45*(2006.01)i; *G01N 21/27*(2006.01)i
FI: G01J3/45; G01N21/27 Z

According to International Patent Classification (IPC) or to both national classification and IPC

**B. FIELDS SEARCHED**

Minimum documentation searched (classification system followed by classification symbols)

G01J 3/00 - G01J 3/52; G01N 21/00 - G01N 21/61

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| X | LYULIN, O.M. et al. Line parameters of 15N216O from Fourier transform measurements in the 5800-7600cm-1 region and global fitting of line positions from 1000 to 7600cm-1. JOURNAL OF QUANTITATIVE SPECTROSCOPY & RADIATIVE TRANSFER. February 2010, vol. 111, issue 3, pp. 345-356, <DOI:10.1016/j/jqsrt.2009.10.010> * abstract, sections 2-3 * | 1-2, 5-7 |
| A | | 3-4 |
| A | JP 2001-506753 A (UNIVERSITY OF WOLLONGON) 22 May 2001 (2001-05-22) * p. 6, line 4 to p. 7, line 2, p. 16, line 25 to p. 24, line 27, fig. 1, 3 * | 1-7 |
| A | JP 10-206235 A (THE PERKIN-ELMER CORPORATION) 07 August 1998 (1998-08-07) * paragraphs [0010]-[0014] * | 1-7 |
| A | US 6049762 A (PERKIN ELMER LLC) 11 April 2000 (2000-04-11) * column 3, line 26 to column 4, line 40 * | 1-7 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 December 2021** | **28 December 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/041441**

| Patent document cited in search report | | | Publication date (day/month/year) | Patent family member(s) | | | Publication date (day/month/year) |
|---|---|---|---|---|---|---|---|
| JP | 2001-506753 | A | 22 May 2001 | US | 5838008 | A | |
| | | | | \* column 1, line 45 to column 2, line 20, column 7, line 54 to column 12, line 47, fig. 1(a)-1(f), 3 \* | | | |
| | | | | WO | 98/27416 | A1 | |
| | | | | CA | 2194110 | A1 | |
| JP | 10-206235 | A | 07 August 1998 | EP | 849575 | A2 | |
| | | | | \* column 3, line 29 to column 4, line 12 \* | | | |
| | | | | JP | 4041199 | B2 | |
| US | 6049762 | A | 11 April 2000 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6034439 A